Europäisches Patentamt

European Patent Office

Office européen des brevets

(11) Publication number: **0 286 599 B1**

# EUROPEAN PATENT SPECIFICATION

(45) Date of publication of patent specification: **23.09.92**  (51) Int. Cl.⁵: **B60T 15/24**

(21) Application number: **88830105.8**

(22) Date of filing: **15.03.88**

(54) Pneumatic servo-diverter for controlling the braking of a trailer and equipment incorporating the servo-diverter.

(30) Priority: **07.04.87 IT 6728587**

(43) Date of publication of application:
**12.10.88 Bulletin 88/41**

(45) Publication of the grant of the patent:
**23.09.92 Bulletin 92/39**

(84) Designated Contracting States:
**AT BE CH DE ES FR GB IT LI NL SE**

(56) References cited:
**EP-A- 0 157 945**
**DE-A- 3 044 228**
**FR-A- 2 399 598**

(73) Proprietor: **BENDIX HEAVY VEHICLE SYSTEMS
ITALIA S.P.A.
Via Adriano 81
I-20128 Milano(IT)**

(72) Inventor: **Angelillo, Domenico
Via Pisa 54
I-20099 Sesto S. Giovanni Milano(IT)**

(74) Representative: **Ouinterno, Giuseppe et al
c/o Jacobacci-Casetta & Perani S.p.A. Via
Alfieri, 17
I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a pneumatic servo-diverter for connection in the braking system of a tractor for controlling the braking of a trailer.

More specifically, the invention relates to a servo-diverter comprising

a body in which are defined

a first chamber with a pressure supply connector, an outlet for connection to the supply line (automatic line) of the braking system of the trailer, and an exhaust opening, and

a second chamber with first and second inlet openings intended to be put into communication with an outlet of the control distributor of the braking system of the tractor and with the control line of the braking system of the trailer, respectively,

valve means being provided in the first chamber and including a movable control member which extends through the first and second chambers and is movable between respective first and second conditions in which the valve means allow communication between the inlet connector and the outlet of the first chamber and between the outlet and the exhaust opening, respectively, by the effect of the difference between the pressures supplied to the first and second inlet openings and against the action of opposing resilient means.

A pneumatic servo-diverter device of this type is represented, for example, by the device incorporated in the triple-control servo-distributor with adjustable predominance produced and marketed by the Applicants themselves under the commercial designation AC 595.

The object of the present invention is to produce a pneumatic servo-diverter of the type specified above which makes unnecessary the use of a reducer or limiter of the pressure supplied to the automatic line connecting the tractor to the trailer.

This object is achieved according to the present invention by means of a servo-diverter of the type defined above, whose principal characteristic lies in the fact that the above-mentioned control member has a reaction surface on which the pressure supplied to the outlet of the first chamber acts against the action of the opposing resilient means, so that the control member can assume an intermediate condition in which the valve means disconnect the outlet of the first chamber from the inlet connector and from the exhaust opening when the pressure supplied to the outlet reaches a predetermined value.

Further characteristics and advantages of the invention will become clear from the detailed description which follows with reference to the appended drawings, provided purely by way of non-limiting example, in which:

Figure 1 is an axially sectioned view of a servo-distributor according to the present invention,

Figures 2 to 4 are sectional views which show a triple-control servo-distributor incorporating a servo-diverter according to the invention, this servo-diverter being shown in three different operating conditions.

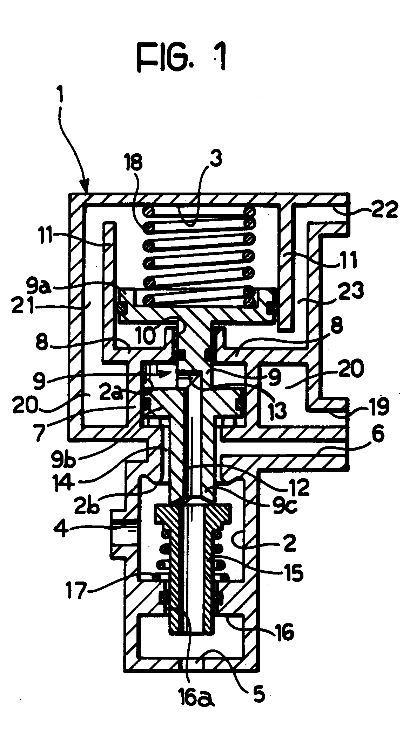

With reference to Figure 1, a servo-diverter according to the present invention comprises a hollow body 1, for example of metal, having a generally tubular shape, in which a lower chamber 2 and an upper chamber 3 are formed. The chamber 2 has a pneumatic pressure supply connector 4 on one side, an exhaust or vent opening 5, and an outlet opening 6 at a higher level than the supply connector 4.

The lower chamber 2 has an extension 2a in the upper portion of the body 1, this extension being defined by a cylindrical lateral wall 7 and a flat upper wall 8.

A movable control member, generally indicated 9, is mounted so as to be sealingly translatable through a passage 10 formed in the wall 8 of the body 1.

The chamber 3 is defined by a substantially cylindrical lateral wall 11 coaxial with the passage 10 and the chamber 2 below.

The movable member 9 has a substantially piston-like portion 9a within the chamber 3, which is axially sealingly translatable against the wall 11 of the chamber 3. In its middle zone, the member 9 has a further portion 9b, also substantially piston-like, which is sealingly slidable against the wall 7 of the extension 2a of the chamber 2.

Finally, the member 9 has a tubular lower end portion 9c having an axial passage 12. This passage communicates with the region above the piston portion 9b through a radial passage 13.

An annular space 14 is defined between the tubular portion 9c of the movable member 9 and the surrounding portion of the wall of the body 1.

In the chamber 2, the wall of the body 1 forms an annular valve seat 2c around the portion 9c of the member 9.

A tubular obturator, indicated 15, is mounted so as to be axially sealingly translatable through the central aperture 16a of a transverse wall 16 inside the lower portion of the chamber 2. A spring 17 reacting against this wall tends to push the tubular obturator 15 against the end of the lower portion 9c of the movable control member, this end acting as a valve seat. In the operating condition illustrated in Figure 1, the obturator 15 and the member 9 are in contact with each other, so that the outlet 6 is disconnected from the exhaust opening 5. This outlet is, however, in communication with the supply connector 4.

As will be seen from the following, the upper portion of the obturator 15 is also intended to cooperate with the seat 2c, so as to disconnect the outlet 6 from the chamber 2.

A helical spring, indicated 18, is interposed between the portion 9a of the movable member 9 and the upper wall of the chamber 3. This spring tends to push the member 9 downwards towards the tubular obturator 15.

An inlet opening 19 in the body 1 communicates with the region of the chamber 3 above the piston portion 9a of the control member 9, through an annular passage 20 surrounding the wall 7 and an axial passage 21. A further inlet opening 22, which communicates with the region of the chamber 3 below the piston portion 9a of the member 9 through a passage 23, is formed in the body 1.

The servo-diverter described above is intended to be connected in the pneumatic braking system of a tractor so as to control the braking of a trailer or semi-trailer towed by the tractor. Thus, the supply connector 4 is intended to be connected to a pneumatic pressure source, not illustrated, for example, a pressure reservoir of the tractor. The outlet 6 is intended to be connected to the supply line (the so-called "automatic" line) of the braking system of the trailer. The inlet opening 19 is intended to be connected to the braking control line ("regulable" line) whilst the opening 22 is intended to be connected to an outlet of the braking control distributor of the tractor (for example of duplex- or tandem-type) activated by the brake pedal.

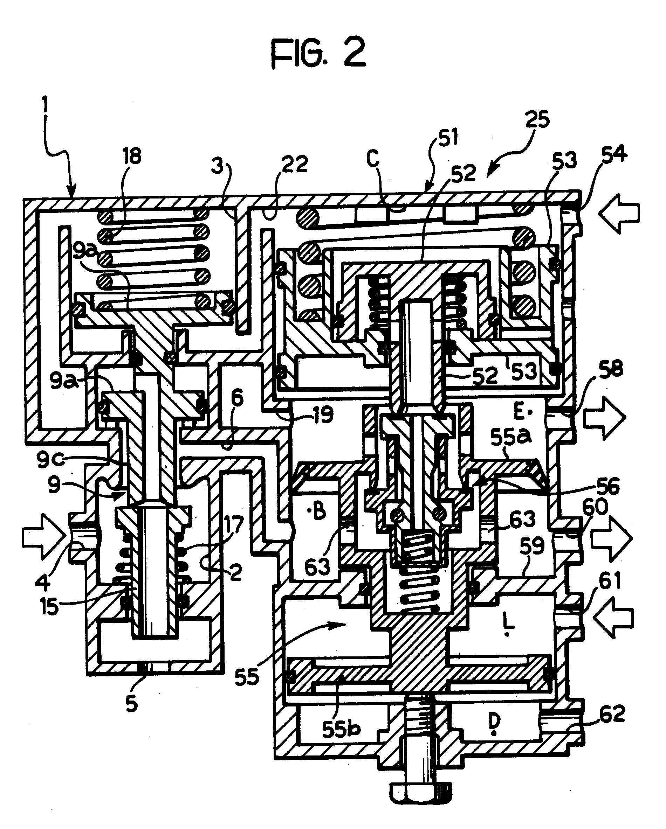

The connections of the openings 6, 19 and 22 can be made, for example, through a triple-control servo-distributor device of known type, such as that generally indicated 25 in Figures 2 to 4. In this case, the servo-diverter 1 can conveniently be integrated with the servo-distributor so as to form a single unit.

The triple-control servo-distributor 25 illustrated in the drawings corresponds to the equipment produced and marketed by the Applicants under the commercial designation AC 595, and described on pages 116-118 of the instruction manual "Apparecchiature pneumatiche" published by Magneti Marelli S.p.A. in December 1983.

The structure and operation of this device, therefore, will be repeated only briefly in the present description.

With reference to Figure 2, the triple-control servo-distributor illustrated comprises a body 51, for example of metal, in which, from top to bottom, a series of chambers are defined:

- a chamber C between the upper wall of the body 51 and two pistons 52 and 53; this chamber communicates permanently with the inlet opening 22 of the servo-diverter 1 and is intended to be connected to an outlet of the duplex or tandem braking control distributor of the tractor through an inlet connector 54;

- a variable-volume chamber E between the pistons 52 and 53 and the upper piston-like portion 55a of a shaped movable body 55 and a valve 56; this chamber communicates permanently with the inlet opening 19 of the servo-diverter 1 and also with the regulable control line of the trailer braking system through an outlet connector 58;

- a variable-volume chamber B between the piston portion 55a of the body 55 and a transverse partition 59 through which the member 55 is sealingly slidable; the chamber B communicates permanently with the outlet 6 of the servo-diverter and is also intended to be put into communication with the (automatic) supply line of the braking system of the trailer through a connector 60;

- a chamber L between the partition 59, the body 55 and a piston-like portion 55b of the body which is sealingly slidable in the lower part of the body 51; the chamber L is intended to be connected to the manually-controlled distributor or valve of the parking and emergency brakes of the tractor through a connector 61;

- a chamber D between the portion 55b of the body 55 and the base wall of the body 51; this chamber is intended to be connected to the other section of the duplex or tandem braking control distributor through a connector 62.

The servo-diverter according to the invention and the unit illustrated with reference to Figures 2 to 4 operate in the following manner.

In normal running conditions, if the braking system is not activated, the servo-diverter is in the condition illustrated in Figures 1 and 2. In this condition, the compressed air is supplied to the automatic line of the trailer through the supply connector 4 to the chamber 2 and the outlet 6 of the servo-diverter, and to the chamber B and the outlet connector 60 of the servo-distributor 25. The valve consisting of the movable member 9 of the servo-diverter and the obturator 15 is closed, so that the outlet 6 is disconnected from the exhaust or vent opening 5.

As the pressure supplied to the braking system of the trailer gradually increases, the movable control member 9 of the servo-diverter is gradually displaced upwards by the effect of the pressure acting on the lower face of its piston portion 9b. When the pressure of the air supplied the trailer reaches a predetermined value, the obturator 15 of the servo-diverter abuts the valve seat 2b formed in the body 2 around the passage through which the tubular portion 9c of the control member 9 extends with clearance. Consequently, the chamber 2 and the supply connector 4 are disconnected from the outlet 6 of the servo-diverter and from the (automatic) supply line of the trailer. The servo-diverter thus also limits the pressure supplied to the braking system of the trailer.

When the braking system is operated compressed air enters the part of the chamber 3 of the servo-diverter below the piston portion 9a of the movable member 9, through the chamber C. This pressure also causes the valve 56 to open by causing the pistons 51 and 52 to descend, so that the compressed air can pass from the chamber B to the chamber E through the opening 63 of the body 55 and the valve which is now open. A pressure (regulable pressure) for controlling the braking of the trailer is supplied through the outlet connector 58. The pressure in the chamber E exerts a force on the piston portion 9a of the control member 9 of the servo-diverter through the passages 19, 20 and 21. Moreover, the control member 9 remains in the position illustrated in Figures 1 to 3 under the action of the spring 18, assisted by the action of the regulable pressure of the chamber E, against the action of the control pressure of the braking system coming from the chamber C of the servo-distributor.

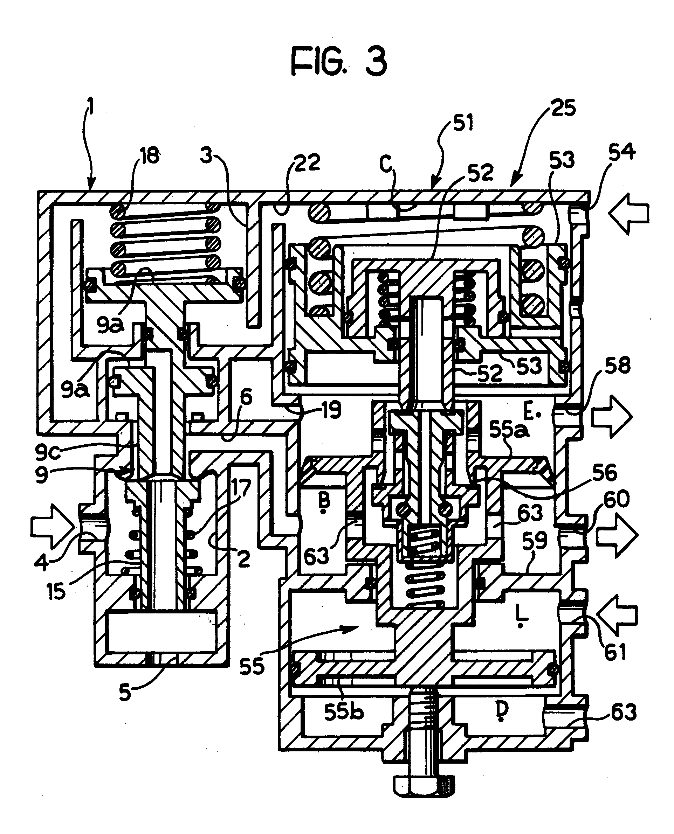

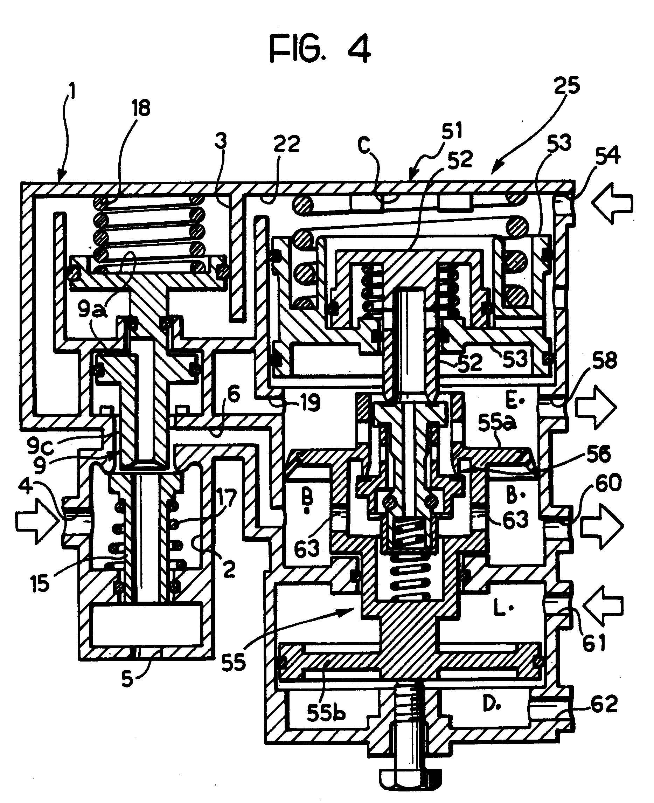

In the case of damage to the control line of the braking system of the trailer connected to the outlet connector 58 of the servo-distributor, the regulable pressure no longer acts on the piston 9a in the upper part of the chamber 3. In fact, this pressure is discharged through the damaged part. Consequently, the braking control pressure coming from the chamber C acts on the piston 9a and overcomes the force of the spring 18 to cause the whole control member 9 to rise from the position of Figure 3 towards the position of Figure 4: the lower end 9c of the member 9 is removed from the tubular obturator 15, putting the chamber B into communication with the atmosphere through the passage 6 of the servo-diverter and the passage defined within the obturator 15. In this way, a sudden decrease in the pressure supplied to the automatic line of the trailer is produced with the consequent intervention of the automatic braking devices with which the trailer is provided. Automatic braking of the trailer in the event of damage to the regulable line is thus achieved.

## Claims

1.  A pneumatic servo-diverter for controlling the braking of a trailer, comprising
    a body (1) in which are defined
    a first chamber (2) with a pressure supply connector (4), an outlet (6) for connection to the (automatic) supply line of the braking system of the trailer, and an exhaust opening (5), and

a second chamber (3) with first and second inlet openings (22, 19) intended to be put into communication with an outlet of the servo-distributor of the braking system of the tractor and with the (regulable) control line of the braking system of the trailer, respectively;
    valve means (9c, 15, 2b) being provided in the first chamber (2) and including a movable control member (9) which extends through the first and second chambers (2,3) and is movable between respective first and second conditions in which the valve means (9c, 15, 2b) allow communication between the supply connector (4) and the outlet (6) and between the outlet (6) and the exhaust opening (5), respectively, by the effect of the difference between the pressures supplied to the first and second inlet openings (19, 22) of the second chamber (3) and against the action of opposing resilient means (18),
    characterised in that the control member (9) has a reaction surface (9b) on which the pressure supplied to the outlet (6) of the first chamber (2) acts so that the control member (9) can assume an intermediate condition in which the valve means (9c, 15, 2b) disconnect the outlet (6) of the first chamber (2) from the supply connector (4) and from the exhaust opening (5) when the pressure supplied to the outlet (6) reaches a predetermined value.

2.  A servo-diverter according to Claim 1, in which the movable member (9) includes a stem which is axially sealingly translatable through an aperture (10) between the first and second chambers (2, 3)
    characterised in that the movable member (9) has a piston-like portion (9b) which extends radially from the stem and is sealingly translatably mounted in a space (2a) in the body (1) which communicates permanently with the outlet (6) of the first chamber (2).

3.  A servo-distributor, particularly with triple control, for the braking system of a tractor for towing a trailer, characterised in that it incorporates a servo-diverter according to one of the preceding claims.

## Patentansprüche

1.  Druckluft-Servoableitungsventil zur Steuerung des Bremsvorgangs eines Anhängers mit:
    einem Gehäuse (1) mit
    einer ersten Kammer (2) mit einem Druckversorgungsverbinder (4), einer Auslaßöffnung (6) zur Verbindung mit einer (automatischen) Versorgungsleitung des Bremssystems des Anhängers und einer Abluftöffnung (5) und einer zweiten Kammer (3) mit ersten und zweiten Einlaßöffnungen (22, 19) zur Verbindung mit einer Auslaßöffnung eines Servoverteilers des Bremssysstems eines Zugfahrzeuges bzw. mit der (regulierbaren) Steuerleitung des Bremssystems des Anhängers;

Ventilen (9c, 15, 2b) in der ersten Kammer (2) mit einem beweglichen Steuerteil (9), welches sich durch die erste und zweite Kammer (2, 3) erstreckt und zwischen entsprechenden ersten und zweiten Stellungen beweglich ist, in denen durch die Ventile (9c, 15, 2b) eine Verbindung zwischen dem Versorgungsverbinder (4) und der Auslaßöffnung (6) bzw. zwischen der Auslaßöffnung (6) und der Abluftöffnung (5) geschaffen wird, und zwar aufgrund der Wirkung der Differenz zwischen den zu der ersten und zweiten Einlaßöffnung (19, 22) der zweiten Kammer (3) zugeführten Drucke sowie gegen die entgegengesetzte Kraft federnder Einrichtungen (18),

dadurch gekennzeichnet, daß das Steuerteil (9) eine Reaktionsfläche (9b) aufweist, auf die der zu der Auslaßöffnung (6) der ersten Kammer (2) geführte Druck so einwirkt, daß das Steuerteil (9) eine Zwischenstellung einnehmen kann, in welcher die Ventile (9c, 15, 2b) die Auslaßöffnung (6) der ersten Kammer (2) von dem Versorgungsverbinder (4) und von der Abluftöffnung (5) trennen, wenn der zu der Auslaßöffnung (6) geführte Druck einen vorbestimmten Wert erreicht.

2.  Servo-Ableitungsventil nach Anspruch 1, bei dem das bewegliche Steuerteil (9) einen Stab aufweist, der axial und abdichtend durch eine Öffnung (10) zwischen der ersten und der zweiten Kammer (2, 3) geführt werden kann,

dadurch gekennzeichnet, daß das bewegliche Steuerteil (9) einen kolbenähnlichen Abschnitt (9b) aufweist, der sich radial von dem Stab erstreckt und abdichtend und beweglich in einem Raum (2a) des Gehäuses (1) vorgesehen ist, der ständig mit der Auslaßöffnung (6) der ersten Kammer (2) verbunden ist.

3.  Servoverteiler, insbesondere mit dreifacher Steuerung für das Bremssystem eines Zugfahrzeuges zum Ziehen eines Anhängers,

dadurch gekennzeichnet, daß es ein Servoableitungsventil gemäß einem der vorhergehenden Ansprüche aufweist.

**Revendications**

1.  Valve pneumatique de détournement pour la commande de freinage de remorque, comprenant :

un corps (1) dans lequel sont définis

une première chambre (2) avec un connecteur d'alimentation en pression (4), un orifice de sortie (6) pour liaison à la ligne d'alimentation automatique du système de freinage de remorque et une ouverture d'évacuation (5), et

une seconde chambre (3) avec des première et seconde ouvertures d'entrée (22, 19) destinées à être mises en communication avec une sortie du servo-distributeur du système de freinage de l'engin tracteur et avec la ligne de commande (réglable) du système de freinage de remorque, respectivement ;

des moyens de soupape (9c, 15, 2b) prévus dans la première chambre (2) et incluant un élément de commande mobile (9) qui s'étend à travers les première et seconde chambres (2, 3) et qui est mobile entre les premier et second états respectifs dans lesquels les moyens de soupape (9c, 15, 2b) permettent la communication respectivement entre le connecteur d'alimentation (4) et l'orifice de sortie (6) et entre l'orifice de sortie (6) et l'ouverture d'évacuation (5), par l'effet de la différence entre les pressions fournies aux première et seconde ouvertures d'entrée (19, 22) de la seconde chambre (3) et contre l'action des moyens élastiques d'opposition (18),

caractérisée en ce que l'élément de commande (9) possède une surface de réaction (9b) sur laquelle la pression appliquée à l'orifice de sortie (6) de la première chambre (2) agit de sorte que l'élément de commande (9) puisse admettre un état intermédiaire dans lequel les moyens de soupape (9c, 15, 2b) déconnectent l'orifice de sortie (6) de la première chambre (2) du connecteur d'alimentation (4) et de l'ouverture d'évacuation (5) quand la pression fournie à l'orifice de sortie (6) atteint une valeur prédéterminée.

2.  Valve de détournement selon la revendication 1, dans laquelle l'élément mobile (9) inclut une tige qu'il est possible de translater axialement de façon étanche à travers une ouverture (10) entre la première et la seconde chambre (2, 3)

caractérisée en ce que l'élément mobile (9) possède une partie à effet de piston (9b) qui s'étend radialement à partir de la tige et est montée libre de translater de façon étanche dans un espace (2a) du corps (1) qui communique de façon permanente avec l'orifice de sortie (6) de la première chambre (2).

3.  Servo-distributeur, particulièrement avec triple commande, pour le système de freinage d'un engin tracteur pour remorquage d'une remorque, caractérisé en ce qu'il comporte une valve de détournement selon l'une des revendications précédentes.

# FIG. 1

# FIG. 2

# FIG. 3

# FIG. 4